# EUROPÄISCHE PATENTANMELDUNG

(11) **EP 3 869 154 A1**
(43) Veröffentlichungstag der Anmeldung: **25.08.2021**
(21) Anmeldenummer: 21156330.9
(22) Anmeldetag: 10.02.2021
(51) Int. Cl.: G01C 21/00, G01C 21/26, B62D 13/00, G01S 13/87, G01S 13/931, G01S 17/931, G05D 1/02

(54) **SENSORSYSTEM ZUR ERFASSUNG DES UMFELDS VON WENIGSTENS EINER ERSTEN UND EINER ZWEITEN MITEINANDER SCHWENKBAR GEKOPPELTEN FAHRZEUGEINHEIT**

(30) Priorität: 18.02.2020 DE 102020202039
(71) Anmelder: Continental Engineering Services GmbH, 60489 Frankfurt (DE)
(72) Erfinder: Schnöll, Patrick, 60488 Frankfurt am Main (DE); Ferch, Sebastian, 60488 Frankfurt am Main (DE)
(74) Vertreter: Continental Corporation

(57) **Zusammenfassung**

Sensorsystem umfassend wenigstens eine erste und eine zweite Sensoreinheit (1, 2, 3, 4, 5, 6, 7, 8, 9), wobei das Sensorsystem dazu ausgelegt ist, das Umfeld von wenigstens einer ersten und einer zweiten miteinander schwenkbar gekoppelten Fahrzeugeinheit (A, B) zumindest teilweise zu erfassen,
wobei die erste und die zweite Sensoreinheit separat voneinander positionierbar sind,
wobei die erste Sensoreinheit (1, 2, 3, 4,5) an der ersten Fahrzeugeinheit (A) positionierbar ist und die zweite Sensoreinheit (6, 7, 8, 9) an der zweiten Fahrzeugeinheit (B) positionierbar ist, wobei die erste und die zweite Sensoreinheit verschiedene Umfeldbereiche erfassen, wobei das Sensorsystem eine elektronische Kontrolleinheit aufweist, welche mit der ersten und der zweiten Sensoreinheit verbunden ist und so ausgelegt ist, dass sie die Ausgangsdaten der ersten und zweiten Sensoreinheit gemeinsam auswertet, wobei die erste und die zweite Sensoreinheit (1, 2, 3, 4, 5, 6, 7, 8, 9) ihre Sensordaten jeweils mit einer synchronisierten, insbesondere mittels der und/oder relativ zur elektronischen Kontrolleinheit synchronisierten, Zeitinformation versehen bereitstellen und die elektronische Kontrolleinheit so ausgebildet ist, dass sie die relative Positionierung (12) der ersten und zweiten Sensoreinheit bei der Erzeugung eines Umfeldmodells (30) berücksichtigt.

## Beschreibung

Die Erfindung betrifft ein Sensorsystem gemäß Oberbegriff von Anspruch 1 sowie ein Verfahren zur Erzeugung oder Berechnung einer wenigstens zwei-dimensionalen Karte eines Umfeldmodells.

Der Erfindung liegt die Aufgabe zu Grunde, ein Sensorsystem bzw. ein entsprechendes Verfahren vorzuschlagen, bei welchem Ausgangsdaten verschiedener Sensoreinheiten verbessert bzw. präzise bzw. robust miteinander gemeinsam ausgewertet werden können.

Diese Aufgabe wird erfindungsgemäß gelöst durch das Sensorsystem gemäß Anspruch 1 und das Verfahren gemäß Anspruch 10.

Vorzugsweise stellen die erste und die zweite Sensoreinheit ihre Sensordaten jeweils mit einer synchronisierten Zeitinformation versehen bereit, wobei dies insbesondere bedeutet, dass die Zeitinformationen der Sensordaten der unterschiedlichen Sensoreinheiten eine gemeinsame Zeitbasis bzw. Zeitreferenz aufweisen.

Bevorzugt ist das Sensorsystem so ausgebildet, dass es wenigstens eine erste und eine zweite Sensoreinheit umfasst, wobei das Sensorsystem dazu ausgelegt ist, das Umfeld von wenigstens einer ersten und einer zweiten miteinander schwenkbar gekoppelten Fahrzeugeinheit zumindest teilweise oder im Wesentlichen vollständig zumindest in einer ersten Ebene, zu erfassen,
wobei die erste und die zweite Sensoreinheit separat voneinander positionierbar bzw. positioniert sind,
wobei die erste Sensoreinheit an der ersten Fahrzeugeinheit positionierbar/ positioniert ist und die zweite Sensoreinheit an der zweiten Fahrzeugeinheit positionierbar/ positioniert ist, wobei die erste und die zweite Sensoreinheit verschiedene Umfeldbereiche erfassen, wobei das Sensorsystem eine elektronische Kontrolleinheit aufweist, welche mit der ersten und der zweiten Sensoreinheit verbunden ist bzw. kommuniziert, und so ausgelegt ist, dass sie die Ausgangsdaten der ersten und zweiten Sensoreinheit gemeinsam auswertet, wobei die erste und die zweite Sensoreinheit ihre Sensordaten jeweils mit einer synchronisierten, insbesondere mittels der elektronischen Kontrolleinheit synchronisierten, Zeitinformation versehen bereitstellen und die elektronische Kontrolleinheit so ausgebildet ist, dass sie die relative Positionierung der ersten und zweiten Sensoreinheit, insbesondere relativ zueinander, bei der Erzeugung eines Umfeldmodells berücksichtigt.

Die Sensoreinheiten sind vorzugsweise so ausgebildet, dass sie jeweils Ausgangsdaten bereitstellen, welche jeweils eine Zeitinformation aufweisen. Besonders bevorzugt sind die Sensoreinheiten so ausgebildet, dass jedes Ausgangsdatenwort bzw. jeder Ausgangsdatensatz eine Zeitinformation aufweisen.

Es ist bevorzugt, dass die erste und die zweite Sensoreinheit hinsichtlich ihrer relativen Positionierung bezüglich einer ersten definierten Achse relativ zueinander um einen definierten Schwenkwinkel Θ schwenkbar positioniert sind und dass die elektronische Kontrolleinheit so ausgebildet ist, dass der Schwenkwinkel Θ und/oder eine davon abhängige Information zumindest zu definierten Zeitpunkten, insbesondere synchronen Zeitpunkten in Bezug auf eine gemeinsame Zeitbasis, bei der Erzeugung des Umfeldmodells berücksichtigt wird.

Es ist zweckmäßig, dass das Umfeldmodell so ausgebildet ist, dass es eine zumindest zwei-dimensionale Karte von Positionen und/oder Koordinaten aufweist, welche in der elektronischen Kontrolleinheit gespeichert und/oder berechnet ist/wird und in welche durch die erste und die zweite Sensoreinheit erfasste und/oder detektierte Punkte und/oder Objekte als Ausgangsdaten der ersten und zweiten Sensoreinheit bereitgestellt werden und in die zumindest zwei-dimensionale Karte eingetragen und/oder eingerechnet werden, abhängig zumindest von der jeweiligen Zeitinformation der Ausgangsdaten und dem zeitlich dazu im Wesentlichen gleichrangigen und/oder synchronen Schwenkwinkel Θ.
Insbesondere sind die erfassten bzw. detektierten Punkte/ Objekte statische Punkte/Objekte- die von den Sensoreinheiten als relativ zur entsprechenden Sensoreinheit statisch bzw. ortsfest erfasst sind.

Es ist bevorzugt, dass die zumindest zwei-dimensionale Karte des Umfeldmodells als erste Tabelle und/oder Matrix und/oder Datenbank ausgebildet ist und insbesondere eine im Wesentlichen zwei-dimensionale Karte abbildet in welcher sich das Sensorsystem befindet und/oder durch welche das Sensorsystem hindurchbewegt wird.

Zweckmäßigerweise ist die zumindest zwei-dimensionale Karte das Umfeldmodell selbst.

Die Ausgangsdaten der ersten und zweiten Sensoreinheit weisen vorzugsweise jeweils zumindest den Zeitpunkt sowie den Abstand und/oder eine Positionsinformation und/oder eine Geschwindigkeit und/oder relative Geschwindigkeit einer Detektion eines Punktes und/oder Objektes durch die entsprechende Sensoreinheit auf.

Es ist bevorzugt, dass in der elektronischen Kontrolleinheit eine Information über die Positionierung im Sinne der statischen Befestigung jeder Sensoreinheit vorliegt, wobei diese Information der Positionierung insbesondere relativ zu einem Referenzkoordinatensystem wenigstens einer der Fahrzeugeinheiten definiert ist, besonders bevorzugt, jeweils der Fahrzeugeinheit in welcher die Sensoreinheit positioniert ist, gespeichert und/oder vorliegt sowie mindestens eine Fahrdynamikinformation der ersten und/oder der zweiten Fahrzeugeinheit vorliegt, insbesondere die Geschwindigkeit in Längsrichtung der Fahrzeugeinheit, sowie der Schwenkwinkel Θ zwischen erster und zweiter Fahrzeugeinheit, und dass wenigstens in Abhängigkeit dieser Informationen die elektronische Kontrolleinheit eine Sensoreinheitsposition, bzw. die Position der Sensoreinheit, zu jeder Sensoreinheit zu definierten Zeitpunkten berechnet und in Abhängigkeit dieser Sensoreinheitsposition und den Ausgangsdaten der Sensoreinheiten Daten des Umfeldmodells berechnet.

Es ist zweckmäßig, dass das Umfeldmodell statische Umfelddaten von durch die Sensoreinheiten erfassten Punkte und/oder Objekte umfasst, welche in einer wenigstens zwei-dimensionale Karte des Umfeldmodells als erste Tabelle und/oder Matrix und/oder Datenbank gespeichert und/oder berechnet werden sowie dynamische Umfelddaten, welche in einer zusätzlichen Tabelle und/oder Matrix und/oder Datenbank gespeichert und/oder berechnet werden und in Abhängigkeit von durch die Sensoreinheiten erfassten Punkten und/oder Objekten erzeugt werden, wobei diese Punkte und/oder Objekte eine Eigengeschwindigkeit verschieden zu Null aufweisen
oder dass die dynamischen Umfelddaten in der ersten Tabelle und/oder Matrix und/oder Datenbank gespeichert und/oder berechnet werden, wobei die dynamische Information in den Änderungen der Datensätze mit verschiedenen Zeitstempeln beinhaltet ist.

Es ist bevorzugt, dass in der elektronischen Kontrolleinheit die wenigstens zwei-dimensionale Karte des Umfeldmodells auf weitere Informationen zugreift und/oder um weitere Informationen ergänzt wird, aus Positionen und/oder Koordinaten zu erfassten Objekten aus einem Satellitennavigationssystem und/oder einer extern erzeugten zumindest zwei-dimensionalen Karte des durch die Fahrzeugeinheiten durchfahrenen Gebiets.

Es ist zweckmäßig, dass die elektronische Kontrolleinheit zumindest aus den Ausgangsdaten der ersten und zweiten Sensoreinheit sowie den Daten der wenigstens zwei-dimensionale Karte des Umfeldmodells eine bzw. jeweils eine Position der ersten und/oder zweiten Fahrzeugeinheit berechnet, insbesondere wird diese Position der ersten und/oder zweiten Fahrzeugeinheit in Koordinaten der zwei-dimensionalen Karte bereitgestellt und/oder in globalen GPS-Koordinaten.

Es ist zweckmäßig, dass die elektronische Kontrolleinheit die Daten so bewertet bzw. zuordnet, dass Punkte bzw. Objekte der statischen Umfelddaten beispielsweise als Verkehrsinfrastruktur oder Bebauungselemente bewertet und/oder behandelt werden und die Objekte der dynamischen Umfelddaten werden als Verkehrsteilnehmer bewertet und/oder behandelt werden.

Unter einem Objekt wird vorzugsweise eine gemeinsam zuordenbare Gruppe mehrerer Punkte und/oder Sensormessdaten verstanden.

Zumindest die erste und die zweite Sensoreinheit, sind bevorzugt als Radarsensoreinheit, welche insbesondere eine Relativgeschwindigkeitsinformation zu erfassten Punkten/Objekten bereitstellt, und/oder als Kameraeinheit und/oder als Ultraschallsensoreinheit und/oder als Lidareinheit, englisch light detection and ranging, welche insbesondere eine Intensitäts- bzw. Lichtintensitätsinformation zu erfassten Punkten/Objekten bereitstellt, ausgebildet.
Eine bevorzugte Ausbildung der ersten und die zweiten Sensoreinheit jeweils als Radareinheit ermöglicht beispielsweise eine effiziente Ermittlung/Berechnung der Relativgeschwindigkeit der erfassten Punkte/ Objekte zu der erfassenden Sensoreinheit.

Der Begriff elektronische Kontrolleinheit, insbesondere als Berechnungs- und Daten-/ Signalverarbeitungseinheit, wird mit dem Kürzel ECU abgekürzt.

Bevorzugt sind die erste und die zweite Sensoreinheit so ausgebildet und positioniert, dass sich deren erfasste verschiedene Umfeldbereiche, insbesondere zumindest teilweise, überlappen, besonders bevorzugt in Abhängigkeit des Schwenkwinkels Θ.

Bevorzugt wird unter dem Begriff der Umgebung die Umgebung bzw. Fläche verstanden, in welcher die Fahrzeugeinheiten sich aufhalten und/oder in bzw. durch welche die Fahrzeugeinheiten sich bewegen bzw. bewegen können, insbesondere bezogen auf die jeweils durch die Sensoreinheiten erfassten Umfeldbereiche und wenigstens einen Referenzpunkt bzw. ein Referenzkoordinatensystem, beispielsweise Mitte/ zentraler Punkt Vorderachse oder Schwerpunkt erster oder zweiten Fahrzeugeinheit, welches zweckmäßigerweise mit einer Fahrzeugeinheit in definiert Weise verknüpft ist.

Zweckmäßigerweise wird unter einem Umfeldmodell eine definierte Repräsentation der Umgebung bzw. Umfeldrepräsentation verstanden. Insbesondere ausgebildet als Tabelle bzw. Matrix bzw. Datenbank, in welche Positionsdaten hinsichtlich eines definierten Raumes/ erfassten Umfeldbereichs gemeinsam eingetragen werden, wobei jedes Positionsdatum eines Objektes/ Punktes, was die entsprechende Sensoreinheit erfasst, hinsichtlich bzw. in Abhängigkeit der Position der Sensoreinheit selbst, insbesondere deren Erfassungsbereichs, eingetragen bzw. Berechnet wird.

Die erste und/oder zweite Sensoreinheit stellen vorzugsweise als Ausgangsdaten, Reflexionspunkte und/oder Laufzeiten und/oder Abstände und/oder Zeitpunkte zu erfassten Punkten/ Objekten bereit.

Bevorzugt ist das Sensorsystem so ausgebildet, dass der Schwenkwinkel Θ von einem Schwenkwinkelsensor erfasst wird. Alternativ vorzugsweise wird der Schwenkwinkel Θ in der ECU in Abhängigkeit der Ausgangsdaten zumindest der ersten und zweiten Sensoreinheit und insbesondere optional einer dritten Sensoreinheit, berechnet und/oder geschätzt.

Die ECU berechnet vorzugsweise für jeden erfassten Punkt bzw. jedes erfasste Objekt aus den bereitgestellten Sensordaten jeweils eine Koordinateninformation bzw. geometrische Rauminformation, insbesondere hinsichtlich der mindestens zwei-dimensionalen Karte.

Die erste und zweite Sensoreinheit sind vorzugsweise jeweils an bzw. in der ersten bzw. zweiten Fahrzeugeinheit positioniert und/oder befestigt.

Unter der Formulierung schwenkbar miteinander gekoppelt wird bevorzugt, eine relative Verdrehung bzw. ein rotatorischer Freiheitsgrad relativ zueinander um die Hochachse der ersten und zweiten Fahrzeugeinheit verstanden.

Unter einer ersten und zweiten Fahrzeugeinheit wird bevorzugt ein LKW mit Anhänger oder Zugmaschine mit Auflieger/ Anhänger oder ein erster Teil eine Busses und ein damit schwenkbar gekoppelten zweiten Teils eines Busses verstanden oder ein Nutzfahrzeug oder Flurfahrzeug, welches mindestens zwei schwenkbar miteinander gekoppelte Fahrzeugeinheiten umfasst oder ein Schienenfahrzeug mit mindestens einer ersten und zweiten schwenkbar gekoppelten Fahrzeugeinheiten, beispielsweise ein Triebwagen mit einem Wagon oder zwei miteinander gekoppelte Wagons.

Elektronische Kontrolleinheit, ECU, ist bevorzugt als separate Einheit ausgebildet oder in eine der Sensoreinheiten integriert oder in wenigstens zwei Sensoreinheiten verteilt ausgebildet.

Die erste und zweite Sensoreinheit erzeugen und stellen bevorzugt jeweils Ausgangsdaten bereit, welche einen definierten Zeitstempel aufweisen, welche dem Zeitpunkt des Erfassens des Umfelds zugeordnet ist.

Die erste und zweite Sensoreinheit erzeugen die Ausgangsdaten jeweils vorzugsweise synchron, als in Bezug zu einer gemeinsamen Zeitbasis der ECU bzw. die Sensoreinheiten und die ECU haben eine gemeinsame Zeitbasis, beispielsweise bereitgestellt durch einen Bus und/oder jeweils eine Taktgeber/ Zeitgebereinheit.

Unter einer Zeitinformation wird bevorzugt ein Zeitstempel bzw. ein entsprechendes Datum verstanden und andersherum.

Unter dem Begriff Synchron wird vorzugsweise verstanden, dass die Sensoreinheiten bzw. gemeinsam mit der ECU zu definierten Zeitpunkten in Bezug auf eine gemeinsame Zeitbasis agieren bzw. Berechnungen durchführen bzw. Daten bereitstellen.

Vorzugsweise wird in der ersten und/oder zweiten Sensoreinheit oder der ECU aus der relativen Geschwindigkeit eines erfassten Punkts/ Objekts relativ zur erfassenden Sensoreinheit, eine Eigengeschwindigkeit des erfassten Punkts/ Objekts, insbesondere als Geschwindigkeit relativ zu einem ortsfesten Referenzpunkt oder ortfesten Referenzkoordinatensystems des Umfelds bzw. der zumindest zwei-dimensionalen Karte des Umfeldmodells, berechnet.

Bevorzugt wird unter dem Begriff der Eigengeschwindigkeit der Punkte bzw. Objekte eine relative Geschwindigkeit relativ zu einem ortsfesten Referenzpunkt oder ortfesten Referenzkoordinatensystems des Umfelds bzw. der zumindest zwei-dimensionalen Karte des Umfeldmodells verstanden.

### Bezugszeichen

- A: erste Fahrzeugeinheit
- B: zweite Fahrzeugeinheit
- Θ1: Schwenkwinkel zwischen erster und zweiter Fahrzeugeinheit
- 1 bis 5: Sensoreinheiten an/ in der ersten Fahrzeugeinheit positioniert
- 6 bis 9: Sensoreinheiten an/ in der zweiten Fahrzeugeinheit positioniert
- 10: Fahrdynamikinformationen
- 11: Schwenkwinkelinformationen
- 12: relative Positionierung der Sensoreinheiten
- 19: Sensoreinheitsposition zu jeder Sensoreinheit
- 20: statische Umfelddaten des Umfeldmodells
- 21: dynamische Umfelddaten des Umfeldmodells
- 22: zwei-dimensionale Karte des Umfeldmodells
- 30: Umfeldmodell
- 31: Fahrzeugposition

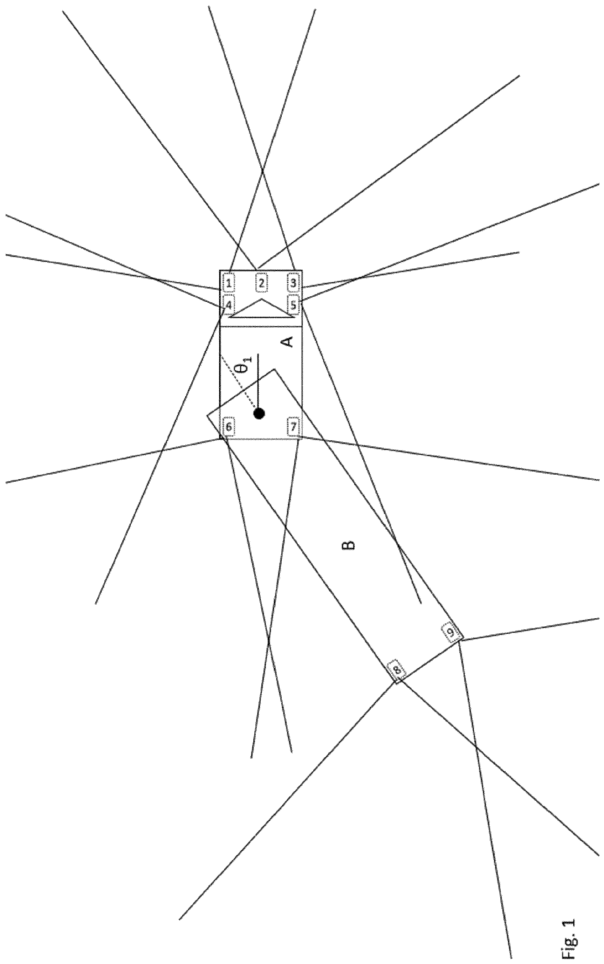

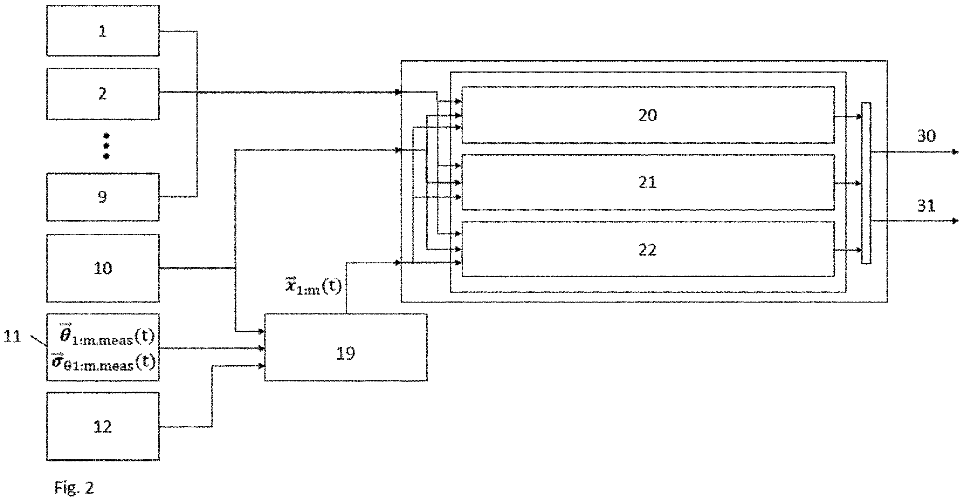

Figuren 1 und 2 zeigen jeweils in schematischer Darstellung beispielhafte Aspekte des Sensorsystems bzw. des Verfahrens.

Fig. 1 zeigt beispielhaft eine erste und eine zweite Fahrzeugeinheit A, B, als Zugfahrzeug A und Anhänger B beispielhaft ausgebildet, welche um den Schwenkwinkel Θ1 gegeneinander verdrehbar bzw. schwenkbar sind. Die erste Fahrzeugeinheit A weist die Umfeldsensoren 1 bis 5, welche das Umfeld, im Wesentlichen nach vorne und seitlich des Zugfahrzeugs erfassen, die zweite Fahrzeugeinheit B die Umfeldsensoren 6 bis 9 auf. Beispielhaft sind die erste Sensoreinheit 1 und die zweite Sensoreinheit 8 separat voneinander auf den beiden schwenkbar gekoppelten Fahrzeugeinheiten positioniert. Eine nicht dargestellte ECU wertet die Ausgangsdaten der Umfeldsensoren 1 bis 9 gemeinsam aus, wobei die Ausgangsdaten jeweils synchron eine Zeitinformation zu den jeweiligen Ausgangsdaten bereitstellen bzw. aufweisen.
Der jeweilige Erfassungsbereich jeder der Sensoreinheiten 1 bis 9 ist beispielhaft durch die jeweils zwei von der Sensoreinheit ausgehenden Strahlen veranschaulicht, wobei der Erfassungsbereich jeweils im Wesentlichen seitlich durch diese beiden Strahlen begrenzt wird.

Anhand der Fig. 2 ist beispielhaft die Funktionsweise des Sensorsystems veranschaulicht, wobei die Funktionsblöcke 19, 20, 21 und 22 in der elektronischen Kontrolleinheit, auch ECU genannt, ausgebildet sind. Der ECU werden die Ausgangsdaten bzw. Ausgangssignale der Sensoreinheiten 1 bis 9 bereitgestellt, sowie Fahrzeugdynamiksignale bzw. Fahrdynamikinformationen 10, welche insbesondere die Eigengeschwindigkeit der ersten und zweiten Fahrzeugeinheit umfassen, sowie die Schwenkwinkeldaten Θ1 als auch eine Information zur Varianz der Schwenkwinkeldaten Θ1, anhand der Funktionsblocks 11 veranschaulicht. Außerdem stehen der ECU die statischen Positionierparameter der Sensoreinheiten bzw. statischen Verbauparameter bzw. die Daten über die relative Positionierung der Sensoreinheiten in Funktionsblock 12 bereit.

Die ECU erzeugt ein Umfeldmodell, welches auch beispielhaft als Weltperzeption verstanden werden kann, wobei statische Umfelddaten 20 und dynamische Umfelddaten 21 berechnet werden sowie eine Kartenerstellung 22 einer zumindest zwei-dimensionalen Karte. Die ECU berechnet aus diesen Daten beispielweise eine Fahrzeugposition 30 bezogen auf die zwei-dimensionale Karte und beispielhaft auch bezogen auf globalen GPS-Koordinaten und stellt ein Umfeldmodell 31 bezogen auf die zwei-dimensionale Karte bereit. Dabei ist dieses Umfeldmodell 31 beispielgemäß ein fusioniertes statisches und dynamisches Umfeldmodell.

Die Sensoreinheitsposition zu jeder Sensoreinheit, Funktionsblock 19, bzw. die entsprechenden Informationen 19 werden beispielhaft aus den Funktionsblöcken 10, 11 und 12 berechnet. Dabei ist *̅*̅*̅θ̅*̅*̅*̅_{1̅:m,meas}(t)beispieihaft der Vektor der Artikulationswinkel-Messungen und ***̅σ̅*̅**_{1:m},ₘₑₐₛ(t) beispielhaft Vektor der Artikulationswinkel-Messvarianzen. ***̅x̅*̅**_{1:m}(t) bezeichnet die geschätzten Sensor-Zustandsvektoren im Referenzkoordinatensystem.

Die Fahrdynamikinformationen 10 der ersten und/oder der zweiten Fahrzeugeinheit A. B umfassen beispielgemäß die Geschwindigkeit in Längsrichtung der jeweiligen Fahrzeugeinheit, sowie der Schwenkwinkel Θ zwischen erster und zweiter Fahrzeugeinheit wobei in Abhängigkeit dieser Informationen die elektronische Kontrolleinheit eine Sensoreinheitsposition 19 zu jeder Sensoreinheit 1, 2, 3, 4, 5, 6, 7, 8, 9 zu definierten Zeitpunkten berechnet und in Abhängigkeit dieser Sensoreinheitsposition 19 und den Ausgangsdaten der Sensoreinheiten 1, 2, 3, 4, 5, 6, 7, 8, 9 Daten des statischen und des dynamischen Umfeldmodells 20, 21 und damit des resultierenden Umfeldmodells 30 berechnet.

Dabei werden beispielgemäß zumindest in Abhängigkeit der Fahrdynamikinformationen 10 und der Sensoreinheitpositionen 19 das dynamische Umfeldmodell und die zwei- dimensionale Karte des Umfeldmodells 22 berechnet.

Mittels der Fahrdynamikinformationen 10 wird zwischen dynamischen und statischen erfassten Objekten/ Punkten unterschieden, welche in die Umfelddaten des dynamischen bzw. statischen Umfeldmodells 20, 21 einfließen.

In den Funktionsblöcken 20, 21, 22 wird beispielhaft jeweils eine Fusion der Eingangsdaten des jeweiligen Funktionsblocks durchgeführt.

Das Umfeldmodell der statischen Umfelddaten 20 umfasst beispielgemäß von durch die Sensoreinheiten 1 bis 9 erfassten Punkte und/oder Objekte, welche in der wenigstens zwei-dimensionale Karte des Umfeldmodells 22 als erste Tabelle bzw. Matrix bzw. Datenbank berechnet und gespeichert werden.
Die dynamischen Umfelddaten 21, welche in einer zusätzlichen Tabelle bzw. Matrix bzw. Datenbank berechnet und gespeichert werden, werden beispielgemäß in Abhängigkeit von durch die Sensoreinheiten 1 bis 9 erfassten Punkte und/oder Objekten erzeugt, wobei diese Punkte und/oder Objekte eine Eigengeschwindigkeit verschieden zu Null aufweisen oder dass die dynamischen Umfelddaten 21 in der ersten Tabelle bzw. Matrix bzw. Datenbank berechnet und gespeichert werden, wobei die dynamische Information in den Änderungen der Datensätze mit verschiedenen Zeitstempeln beinhaltet ist.

In der elektronischen Kontrolleinheit greift die wenigstens zwei-dimensionale Karte 22 des Umfeldmodells beispielgemäß auf weitere Informationen zu bzw. diese Karte wird um weitere Informationen ergänzt, aus Positionen und/oder Koordinaten zu erfassten Objekten aus einem Satellitennavigationssystem und optional beispielhaft aus einer extern erzeugten zumindest zwei-dimensionalen Karte des durch die Fahrzeugeinheiten A, B durchfahrenen Gebiets.

## Patentansprüche

1. Sensorsystem umfassend wenigstens eine erste und eine zweite Sensoreinheit (1, 2, 3, 4, 5, 6, 7, 8, 9), wobei das Sensorsystem dazu ausgelegt ist, das Umfeld von wenigstens einer ersten und einer zweiten miteinander schwenkbar gekoppelten Fahrzeugeinheit (A, B) zumindest teilweise zu erfassen,
wobei die erste und die zweite Sensoreinheit separat voneinander positionierbar sind,
wobei die erste Sensoreinheit (1, 2, 3, 4,5) an der ersten Fahrzeugeinheit (A) positionierbar ist und die zweite Sensoreinheit (6, 7, 8, 9) an der zweiten Fahrzeugeinheit (B) positionierbar ist, wobei die erste und die zweite Sensoreinheit verschiedene Umfeldbereiche erfassen, wobei das Sensorsystem eine elektronische Kontrolleinheit aufweist, welche mit der ersten und der zweiten Sensoreinheit verbunden ist und so ausgelegt ist, dass sie die Ausgangsdaten der ersten und zweiten Sensoreinheit gemeinsam auswertet, **dadurch gekennzeichnet, dass**
die erste und die zweite Sensoreinheit (1, 2, 3, 4, 5, 6, 7, 8, 9) ihre Sensordaten jeweils mit einer, insbesondere mittels der und/oder relativ zur elektronischen Kontrolleinheit synchronisierten, Zeitinformation versehen bereitstellen und die elektronische Kontrolleinheit so ausgebildet ist, dass sie die relative Positionierung (12) der ersten und zweiten Sensoreinheit bei der Erzeugung eines Umfeldmodells (30) berücksichtigt.

2. Sensorsystem nach Anspruch 1, **dadurch gekennzeichnet, dass** die erste und die zweite Sensoreinheit hinsichtlich ihrer relativen Positionierung bezüglich einer ersten definierten Achse relativ zueinander um einen definierten Schwenkwinkel (Θ) schwenkbar positioniert sind und dass die elektronische Kontrolleinheit so ausgebildet ist, dass der Schwenkwinkel (Θ) und/oder eine davon abhängige Information zumindest zu definierten Zeitpunkten, insbesondere synchronen Zeitpunkten in Bezug auf eine gemeinsame Zeitbasis, bei der Erzeugung des Umfeldmodells (30) berücksichtigt wird.

3. Sensorsystem nach Anspruch 1 oder 2, **dadurch gekennzeichnet, dass** das Umfeldmodell (30) so ausgebildet ist, dass es eine zumindest zwei-dimensionale Karte (22) von Positionen und/oder Koordinaten aufweist, welche in der elektronischen Kontrolleinheit gespeichert und/oder berechnet ist/wird und in welche durch die erste und die zweite Sensoreinheit (1, 2, 3, 4, 5, 6, 7, 8, 9) erfasste und/oder detektierte Punkte und/oder Objekte als Ausgangsdaten der ersten und zweiten Sensoreinheit bereitgestellt werden und in die zumindest zwei-dimensionale Karte (22) eingetragen und/oder eingerechnet werden, abhängig zumindest von der jeweiligen Zeitinformation der Ausgangsdaten und dem zeitlich dazu im Wesentlichen gleichrangigen und/oder synchronen Schwenkwinkel (Θ).

4. Sensorsystem nach mindestens einem der Ansprüche 1 bis 3, **dadurch gekennzeichnet, dass** die zumindest zwei-dimensionale Karte (22) des Umfeldmodells als erste Tabelle und/oder Matrix und/oder Datenbank ausgebildet ist und insbesondere eine im Wesentlichen zwei-dimensionale Karte (22) abbildet in welcher sich das Sensorsystem befindet und/oder durch welche das Sensorsystem hindurchbewegt wird.

5. Sensorsystem nach mindestens einem der Ansprüche 1 bis 4, **dadurch gekennzeichnet, dass** die Ausgangsdaten der ersten und zweiten Sensoreinheit jeweils zumindest den Zeitpunkt sowie den Abstand und/oder eine Positionsinformation und/oder eine Geschwindigkeit und/oder relative Geschwindigkeit einer Detektion eines Punktes und/oder Objektes durch die entsprechende Sensoreinheit aufweisen.

6. Sensorsystem mindestens einem der Ansprüche 1 bis 5, **dadurch gekennzeichnet, dass** in der elektronischen Kontrolleinheit eine Information über die Positionierung im Sinne der statischen Befestigung jeder Sensoreinheit (1, 2, 3, 4, 5, 6, 7, 8, 9) vorliegt, wobei diese Information der Positionierung insbesondere relativ zu einem Referenzkoordinatensystem wenigstens einer der Fahrzeugeinheiten definiert ist, besonders bevorzugt, jeweils der Fahrzeugeinheit in welcher die Sensoreinheit positioniert ist, gespeichert und/oder vorliegt sowie mindestens eine Fahrdynamikinformation der ersten und/oder der zweiten Fahrzeugeinheit vorliegt, insbesondere die Geschwindigkeit in Längsrichtung der Fahrzeugeinheit, sowie der Schwenkwinkel Θ zwischen erster und zweiter Fahrzeugeinheit, und dass wenigstens in Abhängigkeit dieser Informationen die elektronische Kontrolleinheit eine Sensoreinheitsposition (19) zu jeder Sensoreinheit (1, 2, 3, 4, 5, 6, 7, 8, 9) zu definierten Zeitpunkten berechnet und in Abhängigkeit dieser Sensoreinheitsposition (19) und den Ausgangsdaten der Sensoreinheiten (1, 2, 3, 4, 5, 6, 7, 8, 9) Daten des Umfeldmodells (30) berechnet.

7. Sensorsystem nach Anspruch 6, **dadurch gekennzeichnet, dass** das Umfeldmodell statische Umfelddaten (20) von durch die Sensoreinheiten erfassten Punkte und/oder Objekte umfasst, welche in einer wenigstens zwei-dimensionale Karte des Umfeldmodells (22) als erste Tabelle und/oder Matrix und/oder Datenbank gespeichert und/oder berechnet werden
sowie dynamische Umfelddaten (21), welche in einer zusätzlichen Tabelle und/oder Matrix und/oder Datenbank gespeichert und/oder berechnet werden und in Abhängigkeit von durch die Sensoreinheiten erfassten Punkten und/oder Objekten erzeugt werden, wobei diese Punkte und/oder Objekte eine Eigengeschwindigkeit verschieden zu Null aufweisen oder dass die dynamischen Umfelddaten (21) in der ersten Tabelle und/oder Matrix und/oder Datenbank gespeichert und/oder berechnet werden, wobei die dynamische Information in den Änderungen der Datensätze mit verschiedenen Zeitstempeln beinhaltet ist.

8. Sensorsystem mindestens einem der Ansprüche 1 bis 7, **dadurch gekennzeichnet, dass** in der elektronischen Kontrolleinheit die wenigstens zwei-dimensionale Karte (22) des Umfeldmodells auf weitere Informationen zugreift und/oder um weitere Informationen ergänzt wird, aus Positionen und/oder Koordinaten zu erfassten Objekten aus einem Satellitennavigationssystem und/oder einer extern erzeugten zumindest zwei-dimensionalen Karte des durch die Fahrzeugeinheiten durchfahrenen Gebiets.

9. Sensorsystem nach mindestens einem der Ansprüche 6 bis 8, **dadurch gekennzeichnet, dass** die elektronische Kontrolleinheit zumindest aus den Ausgangsdaten der ersten und zweiten Sensoreinheit (1, 2, 3, 4, 5, 6, 7, 8, 9) sowie den Daten der wenigstens zwei-dimensionale Karte (22) des Umfeldmodells eine Position (31) der ersten und/oder zweiten Fahrzeugeinheit berechnet.

10. Verfahren zur Erzeugung oder Berechnung einer wenigstens zwei-dimensionalen Karte (22) eines Umfeldmodells als erste Tabelle und/oder Matrix und/oder Datenbank mittels eines Sensorsystems nach einem der Ansprüche 1 bis 9, insbesondere wobei die elektronische Kontrolleinheit zumindest aus den Ausgangsdaten der ersten und zweiten Sensoreinheit (1, 2, 3, 4, 5, 6, 7, 8, 9) sowie den Daten der wenigstens zwei-dimensionale Karte des Umfeldmodells eine Position der ersten und/oder zweiten Fahrzeugeinheit (A, B) berechnet.
